# EUROPÄISCHE PATENTSCHRIFT

(11) **EP 0 710 075 B1**
(45) Veröffentlichungstag und Bekanntmachung des Hinweises auf die Patenterteilung: **23.04.1997**
(21) Anmeldenummer: 94921640.2
(22) Anmeldetag: 12.07.1994
(51) Int. Cl.: A23N 7/02

(54) **PELLMASCHINE**
PEELING MACHINE
EPLUCHEUSE

(30) Priorität: 17.07.1993 DE 4324029
(43) Veröffentlichungstag der Anmeldung: 08.05.1996
(73) Patentinhaber: Alexanderwerk Aktiengesellschaft, D-42857 Remscheid (DE)
(72) Erfinder: SCHRAMM, Ute, D-42799 Leichlingen (DE); SCHMIDT, Uwe, D-42859 Remscheid (DE)
(74) Vertreter: Cohausz & Florack
(86) Internationale Anmeldenummer: EP9402270
(87) Internationale Veröffentlichungsnummer: WO9502338

(56) Entgegenhaltungen:
- EP-A- 0 224 108
- DE-A- 2 549 434
- DE-A- 3 305 449
- DE-C- 948 289
- DE-C- 4 224 267
- DATABASE WPI Week 8016, Derwent Publications Ltd., London, GB; AN 80-28759C [16] & SU,A,0 680 716 (POTATO FOOD PROD.) 25. August 1979

## Beschreibung

Die Erfindung betrifft eine Pellmaschine zum Entfernen der Schale von Obst und verschiedenen Gemüsearten, vornehmlich von gekochten Kartoffeln, die ein unterkühltes Werkzeug aufweist und bei der die Kartoffeln auf dem Werkzeug abgerollt werden und dabei die Schale angefroren und von den Kartoffeln abgezogen wird.

In der Praxis sind keine Pellmaschinen für gekochte Kartoffeln bekannt. Die Schale von gekochten Kartoffeln wird ausschließlich in Handarbeit entfernt.

In der deutschen Patentschrift P 42 24 267.3 vom 22.7.1992 wird ein Verfahren und eine Vorrichtung zum Pellen von gekochten Kartoffeln beschrieben, bei der die Kartoffeln auf einen unterkühlten Drehtisch gelangen, an diesen festfrieren und mittels Wendeleisten auf dem Drehtisch rollend bewegt werden.

In der Praxis hat sich durch Versuche gezeigt, daß der vorgeschlagene Weg prinzipiell gangbar ist. Die Kartoffeln frieren an der unterkühlten Fläche des Drehtisches problemlos fest und bei einem danach stattfindenden Rollvorgang verlieren die Kartoffeln entlang ihrer abgerollten Oberfläche die Schale.

Als Nachteil hat Sich ergeben, daß es nicht mit Sicherheit gelingt, die Kartoffeln durch geeignete Wendeleisten oder durch eine gegenseitige Beeinflussung mehrerer Kartoffeln untereinander zu veranlassen, auch über ihre Längsausdehnung abzurollen. Somit ist das Pellergebnis nicht befriedigend, denn an den Spitzen der Kartoffeln, besonders bei festkochenden, länglichen Sorten, wird die Schale nicht gepellt.

Ziel der Erfindung ist es, die Qualität beim Pellen von gekochten Kartoffeln zu verbessern und die in der Praxis übliche Handarbeit beim Pellen von Kartoffeln durch den Einsatz von Maschinen abzulösen.

Die Erfindung stellt sich die Aufgabe, eine Pellmaschine zu entwickeln, bei der die Kartoffeln weitgehend unabhängig von ihrer Form in alle Richtungen auf einem unterkühlten Werkzeug abrollen.

Erfindungsgemäß wird die Aufgabenstellung dadurch gelöst, daß das Pellwerkzeug als vorzugsweise in horizontaler Ebene drehbar gelagerte, angetriebene und unterkühlte Hohlwelle ausgebildet ist, das Pellwerkzeug in axialer Richtung zu den Enden hin einen größer werdenden äußeren Durchmesser aufweist, ein oder mehrere dieser Pellwerkzeuge in einer Pellmaschine vorhanden sind und oberhalb jedes Pellwerkzeugs zumindest ein durch auf die Kontur des Pellwerkzeugs zulaufende Wände gebildet er Bearbeitungsschacht vorgesehen und jedem Pellwerkzeug ein in seiner Form der Kontur des Pellwerkzeugs angepaßter Schaber zugeordnet ist.

Zumindest eine Wand des Bearbeitungsschachtes ist als schwenkbar gelagerte Klappe ausgebildet.

Der Schaber ist unterhalb des Pellwerkzeugs angeordnet.

Die äußere Kontur des Pellwerkzeugs wird aus zwei am kleineren Durchmesser miteinander verbundenen, vorzugsweise gleichartig ausgebildeten Kegelstümpfen gebildet Zwischen den Kegelstümpfen ist ein größerer Radius vorgesehen. Der Kegelwinkel der Kegelstümpfe weist bezogen auf ihre Mittellinie einen Betrag zwischen 20° und 45°, vorzugsweise 35° auf.

Die den Bearbeitungsschacht eines Pellwerkzeugs bildenden Wände sind als miteinander gekoppelte, schwenkbar gelagerte und in ihrer Form der äußeren Kontur des Pellwerkzeugs in axialer Richtung weitgehend angepaßte Klappen ausgebildet.

Mehrere Pellwerkzeuge sind miteinander am größeren Durchmesser der Kegelstümpfe eine Pelltrommel bildend verbunden. Eine Pellmaschine verfügt über eine oder mehrere, vorzugsweise paarweise vorhandene, parallel zueinander angeordnete, vorzugsweise gegenläufig angetriebene Pelltrommeln.

Unterhalb der Bearbeitungsschächte der Pellwerkzeuge und und zwischen jeweils zwei benachbarten Pelltrommeln ist jeweils ein die gepellten Kartoffeln in axialer Richtung der Pelltrommel abführendes Transportband angeordnet.

Alle die Bearbeitungsschächte der Pellwerkzeuge bildenden Wände einer Pelltrommel sind miteinander gekoppelt ausgebildet. Der Schwenkantrieb für die Wände ist in Abhängigkeit von der Pelltrommeldrehzahl und des gewählten Pelltrommeldurchmessers die Wände ein oder mehrmals pro Trommelumdrehung und die Wände von benachbart angeordneten Pelltrommeln zeitlich zueinander versetzt ausschwenkend ausgebildet.

Die den einzelnen Pellwerkzeugen einer Pelltrommel zugeordneten Schaber sind auf einer gemeinsamen Achse angeordnet. Die Achse weist die Schaber an die Pelltrommel anpressende Gummielemente auf.

Oberhalb der Bearbeitungsschächte ist eine die Kartoffeln in die Bearbeitungsschächte fördernde Zuführrutsche vorhanden. Die näher an und unterhalb der Zuführrutsche angeordneten Wände der Bearbeitungsschächte verfügen über die Zuführrutsche in Arbeitsstellung der Wände verschließende Stege.

Die in größerer Entfernung zur Zuführrutsche gelegenen Wände der Bearbeitungsschächte , die Zuführrutsche und/oder die Stege sind die Zuführöffnung der Bearbeitungsschächte während der Abgabe der gepellten Kartoffeln aus den Bearbeitungsschächten verschließend ausgebildet und angeordnet.

Im Bereich der Zuführrutsche ist eine Vorratswanne angeordnet.

Die Erfindung wird durch ein Ausführungsbeispiel näher erläutert. Es zeigen:

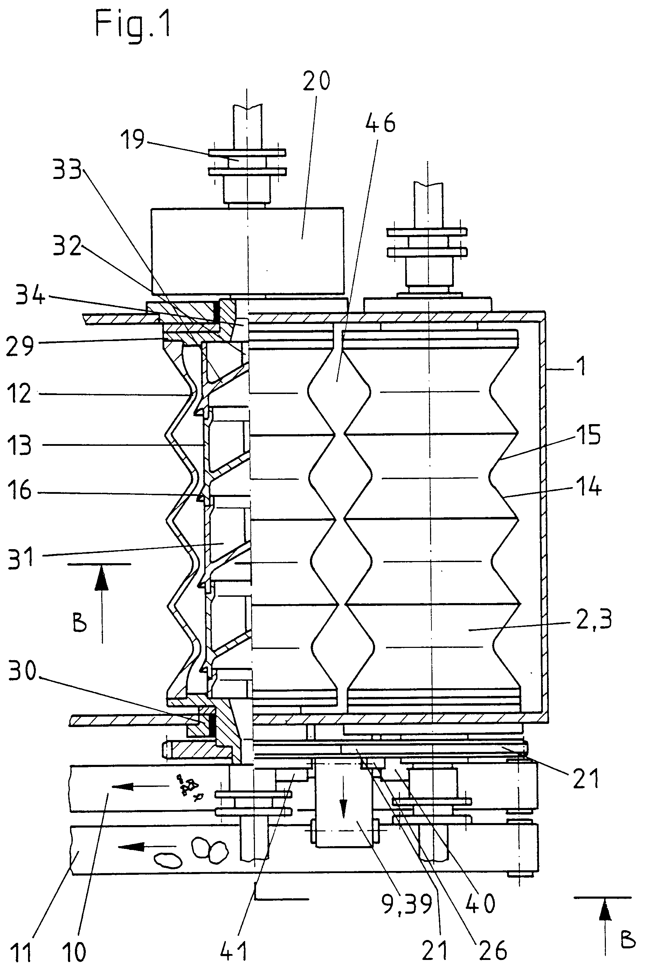

- Fig. 1: eine Draufsicht auf die Pellmaschine ohne Vorratswanne und Zuführrutsche

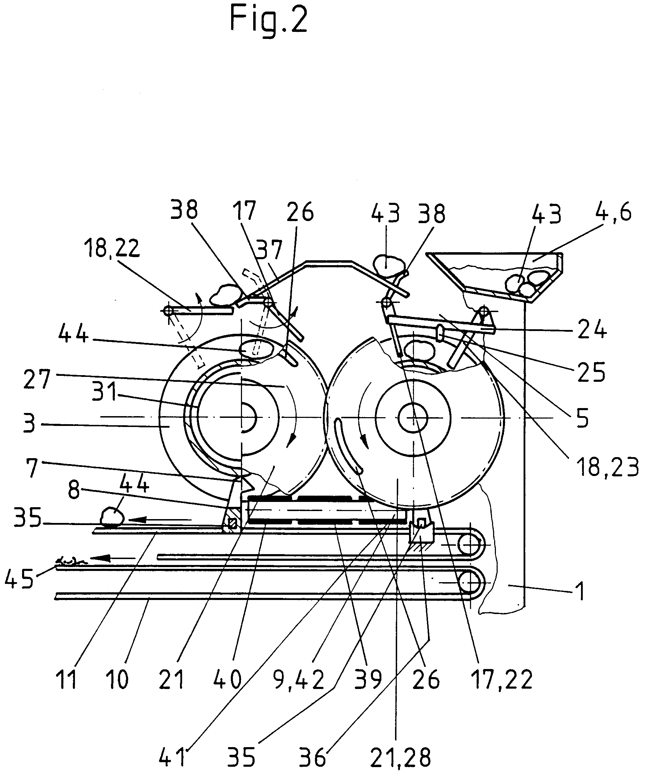

- Fig. 2: einen Schnitt B-B der Fig. 1
Wesentliche Teile der Pellmaschine sind ein Gestell 1, zwei aus mehreren, getrennt voneinander arbeitenden Werkzeugen 2 bestehende Pelltrommeln 3, eine aus einer Aufgabeschale 4 und jedem Werkzeug 2 zugeordnete Bearbeitungsschächte 5 bestehende Zuführeinrichtung 6, eine aus jedem Werkzeug 2 zugeordneten Schabern 7 bestehende Abschabeinrichtung 8 zum Abschaben der an die Pelltrommel 3 angefrorenen Kartoffelschale, ein dreiteiliges Förderband 9 zum Abführen der gepellten Kartoffeln und der gepellten Schale aus der Pellmaschine, ein Sammelband 10 für die abgepellte Schale und ein Kontrollband 11 zur Kontrolle, Nacharbeit und zum Abtransport der gepellten Kartoffeln.

Jedes Werkzeug 2 der Pelltrommel 3 besteht aus einer Hohlwelle 12 und einem Einsatz 13. Die Hohlwelle 12 ist aus zwei Kegelstümpfen 14, 15 aufgebaut, die im Bereich ihrer kleineren Durchmesser über einen relativ großen, die Mitte des Werkzeuges bildenden Radius, miteinander verbunden sind.

Der Einsatz 13 weist einen Leitkegel 16 auf, der das die Hohlwelle 12 durchströmende Kühlmittel entlang der inneren Kontur des Kegelstumpfes 15 leitet.

Weiterhin ist jedem Werkzeug 2 ein oberhalb der Hohlwelle 12 vorgesehener Bearbeitungsschacht 5 zugeordnet, der aus zwei auf die Kontur der Hohlwelle 12 zulaufende, schwenkbare Klappen 17, 18 besteht, die in ihrer Form der Kontur der Hohlwelle 12 weitestgehend angepaßt sind.

Außerdem verfügt jedes Werkzeug 2 über einen unterhalb der Hohlwelle 12 angeordneten Schaber 7, der in seiner Kontur der Kontur der Hohlwelle 12 spaltfrei angepaßt ist.

Mehrere Werkzeuge 2 sind zu einer Pelltrommel 3, die als sich drehende von Kühlmittel durchströmte Hohlwelle ausgebildet ist und bei der die Abdichtung gegen austretendes Kühlmittel über Stopfbuchsen 19 erfolgt, zusammengefaßt.

Die Pellmaschine ist mit zwei dieser Pelltrommeln 3 ausgerüstet.

Der Antrieb einer Pelltrommel 3 erfolgt über ein mit einer Hohlwelle ausgerüstetes Aufsteckgetriebe 20. Beide Pelltrommeln 3 sind mit Stirnrädern 21 versehen, so daß sich die Pelltrommeln 3 gegenläufig drehen. Die Drehzahl beträgt etwa 4 Umdrehungen pro Minute.

Oberhalb einer Pelltrommel 3 ist die mit Wasser gefüllte Aufgabeschale 4 angeordnet.

Die Klappen 17, 18 des jedem Werkzeug 2 zugeordneten Bearbeitungsschachtes 5 sind aus Kunststoff als Spritzgußteil gefertigt und so ausgelegt, daß sie nach ihrer Montage starre Klappenbaugruppen 22, 23 bildend, rastend miteinander befestigt und im Gestell 1 oberhalb jeder Pelltrommel 3 gelagert sind. Die Klappenbaugruppen 22, 23 sind mit dem Gestänge 24 gekoppelt. Das Gestänge 24 verfügt über einen Mitnehmerstift 25, über den die Klappenbaugruppen 22, 23 mit Hilfe von an jedem Stirnrad 21 angeordneten Kurvenscheiben 26 in Transportrichtung 27 der jeweiligen Pelltrommel 3 ausgelenkt werden. Die Kurvenscheiben 26 von benachbart angeordneten Stirnrädern 21, 28 sind um 180° zueinander versetzt angeordnet, so daß die Klappengruppen 22, 23 zeitlich nacheinander verschwenkt werden.

Der jedem Werkzeug zugeordnete Einsatz 13 ist gleichfalls als Kunststoffspritzgußteil ausgebildet und so ausgelegt, daß alle Einsätze 13 rastend aneinander befestigt werden können und eine starre, über die Flansche 29, 30 gelagerte Trommel 31 bilden. Die einzelnen Einsätze 13 der Trommel 31 weisen an ihrem Umfang verteilt angeordnete Schlitze 32 auf. Der Querschnitt jedes Einsatzes 13 ist durch eine Stützwand 33 verschlossen. Durch diese Ausbildung der Einsätze 13 wird erreicht, daß das Kühlmittel durch die Schlitze 32 des im Bereich des Kühlmitteleintritts 34 angeordneten Einsatzes 13 hindurchtreten und entlang des Freiraumes zwischen der inneren Kontur der Pelltrommel 3 und der Trommel 31 hindurchströmen muß.

In den Innenraum der Trommel 31 tritt über die Schlitze 32 gleichfalls Kühlmittel ein. Dadurch stellt die Trommel 31 keinen Auftriebskörper dar, was zu einer wesentlichen Materialeinsparung bei der Dimensionierung der Trommel 31 führt.

Jeder Pelltrommel 3 ist eine unterhalb der Pelltrommel 3 angeordnete Abschabeinrichtung 8 zugeordnet. Die Abschabeinrichtung 8 besteht aus einer Vierkantachse 35, auf der die jedem Werkzeug 2 der Pelltrommel 3 zugeordneten Schaber 7 befestigt sind. Die Vierkantachse 35 ist im Gestell 1 über Schlitzführungen gelagert und wird so lange über Gummipuffer 36 nach oben geführt, bis die Schaber 7 spaltfrei an der Pelltrommel 3 anliegen. Beim weiteren Anpressen der Schaber 7 an die Pelltrommel 3 deformiert sich der Gummipuffer 36. Somit ist erreicht, daß die Abschabeeinrichtung 8 bei auftretendem Verschleiß der Schaber 7 über die sich entspannenden Gummipuffer 36 automatisch nachgestellt wird und damit die Schaber 7 über einen langen Zeitraum funktionsfähig bleiben.

Oberhalb und mittig zu den Pelltrommeln 3 ist eine dachartig ausgebildete Rutsche 37 vorgesehen. Die Klappen 17 verfügen über Stege 38, die in Arbeitstellung der Klappen 17 die Rutsche 37 verschließen.

Mittig und unterhalb der Pelltrommel 3 ist ein Förderband 9 zwischen den Abschabeinrichtungen 8 angeordnet. Das Förderband 9 ist dreiteilig ausgebildet. Das mittlere Band 39 fördert die gepellten Kartoffeln auf das Kontrollband 11 während die beiden äußeren Bänder 40, 41 die abgepellte und von den Pelltrommeln 3 abgeschabte Kartoffelschale zum Sammelband 10 transportieren. Das dreiteilige Förderband 9 weist eine gemeinsame Umlenkachse 42 für alle drei Bänder auf.

Im Ausführungsbeispiel wurde eine Pellmaschine beschrieben, die über zwei Pelltrommeln 3 verfügt. Um eine größere Leistung zu erreichen, ist es möglich, die Anzahl der Werkzeuge 2 jeder Pelltrommel 3 zu erhöhen, weitere Pelltrommeln 3 parallel anzuordnen oder den Durchmesser der Pelltrommeln 3 zu vergrößern und mehrere Kurvenscheiben 26 auf den Stirnrädern 21 anzuordnen, um damit pro Umdrehung der Pelltrommeln 3 mehrere Bearbeitungstakte zu realisieren.

Es ist verständlich, daß bei der Anordnung weiterer Pelltrommeln 3 die Kartoffelzuführung nicht mehr von Hand erfolgen kann. In diesem Fall wird vor der Pellmaschine ein an sich bekannter Förderer installiert, der auf die Bearbeitungsgeschwindigkeit der Pellmaschine abgestimmt, direkt in die Bearbeitungsschächte einzelne Karoffeln zuführt. Der Förderer entnimmt die Kartoffeln aus einem vor der Pellmaschine angeordneten Wasserbehälter und ist mit für jede Pelltrommel 3 unterschiedlich langen Transportbändern ausgerüstet. In diesem Fall ist die Rutsche 37 nicht vorhanden und die Klappen 17 sind nicht mit Stegen 38 ausgerüstet.

Die gekochten Kartoffeln 43 werden in der Aufgabeschale 4 im Wasser gelagert. Die Kartoffeln 43 können unmittelbar nach dem Kochprozeß ohne weitere Kühlung gepellt werden.

Die nicht dargestellte Bedienperson legt die Kartoffeln 43 auf die Rutsche 37 vor jedes Werkzeug 2 der Pelltrommeln 3, dabei werden die Kartoffeln 43 von den Stegen 38 der Klappen 17 auf der Rutsche 37 festgehalten. Danach wird die Pellmaschine eingeschaltet.

Die Kurvenscheiben 26 sind wie beschrieben um 180° zueinander versetzt auf den Stirnrädern 21 befestigt. Dadurch nähert sich zunächst eine Kurvenscheibe 26 dem Mitnehmerstift 25 und lenkt über ihn und das Gestänge 24 die Klappen 17, 18 aus. Dabei schwenken die Stege 38 aus dem Bereich der Rutsche 37 und geben diese frei. In dieser Phase des Bearbeitungsprozesses verschließen die Klappen 18 und die Stege 38 die Bearbeitungsschächte 5. Die Kartoffeln 43 gelangen über die Stege 38 von der Rutsche 37 auf die Klappen 18.

Danach wird der Mitnehmerstift 25 durch die Kurvenscheibe 26 freigegeben, die Klappen 17, 18 bewegen sich in Arbeitsstellung, verschließen über die Stege 38 die Rutsche 37 und die sich auf den Klappen 18 befindenden Kartoffeln 43 rutschen entlang der Klappen 18 auf die Werkzeuge 2 und frieren dort mit ihrer Schale an.

Bei weiterer Drehung der Pelltrommel 3 gelangen die Kartoffeln 43 an den Klappen 17 zur Anlage und rollen danach taumelnd, unterstützt durch die Form der Werkzeuge 2 in unterschiedliche Richtungen auf dem Werkzeug 2 ab, wobei die Schale der Kartoffeln 43 am Werkzeug 2 ständig anfriert und von den Kartoffeln 43 abgezogen wird. In dieser Zeit hat die Bedienperson Gelegenheit, neue Kartoffeln 43 auf die Rutsche 37 vor die Stege 38 zu legen.

Nach einer Umdrehung von etwa 180° der Pelltrommel 3 wiederholt sich der beschriebene Vorgang an der zweiten Pelltrommel 3.

Bei weiterer Drehung der Pelltrommel 3 gelangt die Kurvenscheibe 26 wiederum in den Bereich des Mitnehmerstiftes 25 und lenkt über den Mitnehmerstift 25 und das Gestänge 24 die Klappen 17, 18 in Transportrichtung 27 der Pelltrommel 3 aus. Die Klappen 18 drängen die gepellten Kartoffeln 44 in Transportrichtung 27 der Pelltrommel 3. Die gepellten Kartoffeln 44 unterlaufen die geöffneten Klappen 17 und werden über den sich jeweils zwischen zwei Werkzeugen 2 der beiden Pelltrommeln 3 vorhandenen Abstand 46 auf das Förderband 39 abgegeben. Gleichzeitig wurden beim Schwenken der Klappen 17 die Stege 38 ausgeschwenkt und die Rutsche 37 freigegeben. Die sich dort befindlichen Kartoffeln 43 rutschen wie beschrieben auf die Klappen 18 und gelangen nach dem Schließen der Klappen 17, 18 wiederum in die Bearbeitungsschächte 5.

Der gleiche Vorgang wiederholt sich zeitlich versetzt ständig bei beiden Pelltrommeln 3.

Die gepellten Kartoffeln 44 werden durch das Förderband 39 dem Kartoffelband 11 zugeführt, an dem eine weitere nicht dargestellte Bedienperson die gepellten Kartoffeln 44 begutachtet und bei Bedarf noch anhaftende Schalen entfernt. Danach werden die Kartoffeln 44 über das Kontrollband 11 ihrer weiteren Bearbeitung zugeführt.

Die an den Pelltrommeln 3 angefrorenen Kartoffelschalen 45 werden von den Schabern 7 von den Werkzeugen 2 der Pelltrommeln 3 abgeschabt und fallen auf Bänder 40, 41. Die Bänder 40, 41 transportieren die Kartoffelschalen 45 auf das Sammelband 10.

Es ist zu verzeichnen, daß bei Kartoffelgrößen bis etwa 100 Gramm Gewicht die Kartoffeln fast oder völlig von ihrer Schale befreit werden.

Es ist möglich, mehrere kleine Kartoffeln, die sich bekanntlich besonders gut für Kartoffelsalat eignen und darüber hinaus anderweitig kaum verwendbar und deshalb besonders preisgünstig sind, gleichzeitig zu pellen. Damit erreicht diese vorgestellte Pellmaschine auch bei der Bearbeitung kleiner und kleinster Kartoffelgrößen beachtliche Durchsatzleistungen. Weiterhin ist zu verzeichnen, daß je kleiner die zu pellenden Kartoffeln sind, sich der Anteil fehlerfrei gepellter Kartoffeln ständig erhöht. Somit bietet diese Pellmaschine die Möglichkeit, erstmals die industriell bisher kaum oder lediglich zum Mästen von Tieren zu verwendenden kleinen Kartoffeln direkt der menschlichen Ernährung zuzuführen.

Um einen sicheren Pelleffekt zu erreichen, müssen die Kartoffeln 43 an ihrer Schale mit Wasser benetzt sein. Bei der Bearbeitung von abgekühlten, gekochten Kartoffeln 43 sind die Kartoffeln 43 durch das Wasser in der Aufgabeschale 4 hinreichend mit Wasser benetzt. Werden sehr heiße Kartoffeln 43 gepellt, kann je nach Temperatur der Kartoffeln 43 ein zusätzliches Besprühen der Kartoffeln 43 innerhalb der Bearbeitungsschächte 5 notwendig sein. Der Wasserverbrauch liegt in diesem Fall bei etwa 100 Milliliter pro Kilogramm verarbeiteter Kartoffeln 43.

### Aufstellung der verwendeten Bezugszeichen

- 1: Gestell
- 2: Werkzeug
- 3: Pelltrommel
- 4: Aufgabeschale
- 5: Bearbeitungsschacht
- 6: Zuführeinrichtung
- 7: Schaber
- 8: Abschabeeinrichtung
- 9: dreiteiliges Förderband
- 10: Sammelband
- 11: Kontrollband
- 12: Hohlwelle
- 13: Einsatz
- 14: Kegelstumpf
- 15: Kegelstumpf
- 16: Leitkegel
- 17: Klappe
- 18: Klappe
- 19: Stopfbuchse
- 20: Aufsteckgetriebe
- 21: Stirnrad
- 22: Klappenbaugruppe
- 23: Klappenbaugruppe
- 24: Gestänge
- 25: Mitnehmerstift
- 26: Kurvenscheibe
- 27: Transportrichtung
- 28: Stirnrad
- 29: Flansch
- 30: Flansch
- 31: Trommel
- 32: Schlitz
- 33: Stützwand
- 34: Kühlmitteleintritt
- 35: Vierkantachse
- 36: Gummipuffer
- 37: Rutsche
- 38: Steg
- 39: mittleres Band
- 40: äußeres Band
- 41: äußeres Band
- 42: Umlenkachse
- 43: gekochte Kartoffeln
- 44: gepellte Kartoffeln
- 45: Kartoffelschale
- 46: Abstand

## Patentansprüche

1. Pellmaschine zum Entfernen der Schale von Obst und verschiedenen Gemüsearten, vornehmlich der von gekochten Kartoffeln, die ein unterkühltes Werkzeug (2) aufweist und bei der die Kartoffeln auf dem Werkzeug (2) abgerollt werden und dabei die Schale angefroren und von den Kartoffeln abgezogen wird und bei der ein Schaber (7) zum Entfernen der Schale vom Werkzeug (2) vorhanden ist, dadurch gekennzeichnet, daß das Pellwerkzeug (2) als vorzugsweise in horizontaler Ebene drehbar gelagerte, angetriebene und unterkühlte Hohlwelle ausgebildet ist, das Pellwerkzeug (2) in axialer Richtung zu den Enden hin einen größer werdenden äußeren Durchmesser aufweist, ein oder mehrere dieser Pellwerkzeuge (2) in einer Pellmaschine vorhanden sind und oberhalb jedes Pellwerkzeugs (2) zumindest ein durch auf die Kontur des Pellwerkzeugs (2) zulaufende Wände (17,18) gebildeter Bearbeitungsschacht (5) vorgesehen und jedem Pellwerkzeug (2) ein in seiner Form der Kontur des Pellwerkzeugs (2) angepaßter Schaber (7) zugeordnet ist.

2. Pellmaschine nach Anspruch 1, dadurch gekennzeichnet, daß zumindest eine Wand (17,18) des Bearbeitungsschachtes (5) als schwenkbar gelagerte Klappe ausgebildet ist.

3. Pellmaschine nach Anspruch 1 oder 2, dadurch gekennzeichnet, daß der Schaber (7) unterhalb des Pellwerkzeugs (2) angeordnet ist.

4. Pellmaschine nach einem der Ansprüche 1 bis 3, dadurch gekennzeichnet, daß die äußere Kontur des Pellwerkzeugs (2) aus zwei am kleineren Durchmesser miteinander verbundenen, vorzugsweise gleichartig ausgebildeten Kegelstümpfen (14,15) gebildet wird, zwischen den Kegelstümpfen (14,15) ein größerer Radius vorgesehen ist und der Kegelwinkel der Kegelstümpfe (14,15) bezogen auf ihre Mittellinie einen Betrag zwischen 20° und 45°, vorzugsweise 35° aufweist.

5. Pellmaschine nach einem der Ansprüche 1 bis 4, dadurch gekennzeichnet, daß die den Bearbeitungsschacht (5) eines Pellwerkzeugs (2) bildenden Wände (17,18) als miteinander gekoppelte, schwenkbar gelagerte und in ihrer Form der äußeren Kontur des Pellwerkzeugs (2) in axialer Richtung weitgehend angepaßte Klappen ausgebildet sind,

6. Pellmaschine nach Anspruch 4, dadurch gekennzeichnet, daß mehrere Pellwerkzeuge (2) miteinander am größeren Durchmesser der Kegelstümpfe (14,15) eine Pelltrommel (3) bildend verbunden sind und eine Pellmaschine über eine oder mehrere, vorzugsweise paarweise vorhandene, parallel zueinander angeordnete, als Hohlwellen ausgebildete Pelltrommeln (3) verfügt und die Pelltrommeln (3) vorzugsweise gegenläufig angetrieben ausgebildet sind.

7. Pellmaschine nach Anspruch 6, dadurch gekennzeichnet, daß unterhalb der Bearbeitungsschächte (5) der Pellwerkzeuge (2) und zwischen jeweils zwei benachbarten Pelltrommeln (3) jeweils ein die gepellten Kartoffeln (44) in axialer Richtung der Pelltrommeln (3) abführendes Transportband (39) angeordnet ist.

8. Pellmaschine nach Anspruch 6, dadurch gekennzeichnet, daß alle die Bearbeitungsschächte (5) der Pellwerkzeuge (2) einer Pelltrommel (3) bildenden Wände (17,18) miteinander gekoppelt ausgebildet sind und der Schwenkantrieb (26) für die Wände (17,18) in Abhängigkeit von der Pelltrommeldrehzahl und des gewählten Pelltrommeldurchmessers die Wände (17,18) ein oder mehrmals pro Pelltrommelumdrehung und die Wände (17,18) von benachbart angeordneten Pelltrommeln (3) zeitlich zueinander versetzt ausschwenkend ausgebildet ist.

9. Pellmaschine nach Anspruch 6, dadurch gekennzeichnet, daß die den einzelnen Pellwerkzeugen (2) einer Pelltrommel (3) zugeordneten Schaber (7) auf einer gemeinsamen Achse (35) angeordnet sind und die Achse (35) die Schaber (7) an die Pelltrommel (3) anpressende Gummielemente (36) aufweist,

10. Pellmaschine nach einem der Ansprüche 1 bis 9, dadurch gekennzeichnet, daß oberhalb der Bearbeitungsschächte (5) eine die Kartoffeln (43) in die Bearbeitungsschächte (5) fördernde Zuführrutsche (37) vorhanden ist und die näher an und unterhalb der Zuführrutsche (37) angeordneten Wände (17) der Bearbeitungsschächte (5) über die Zuführrutsche (37) in Arbeitsstellung der Wände (17,18) verschließende Stege (38) verfügen.

11. Pellmaschine nach Anspruch 10, dadurch gekennzeichnet, daß die in größerer Entfernung zur Zuführrutsche (37) gelegenen Wände (18) der Bearbeitungsschächte (5), die Zuführrutsche (37) und/oder die Stege (38) die Zuführöffnungen der Bearbeitungsschächte (5) während der Abgabe der gepellten Kartoffeln (44) aus den Bearbeitungsschächten (5) verschließend ausgebildet und angeordnet sind.

12. Pellmaschine nach Anspruch 10, dadurch gekennzeichnet, daß im Bereich der Zuführrutsche (37) eine Vorratswanne (4) angeordnet ist.

## Claims

1. A peeling machine for removing the skin from fruit and different kinds of vegetables, more particularly the skin of boiled potatoes, the machine having a supercooled tool (2), on to which the potatoes are rolled, the skin being thus frozen and drawn off the potatoes, a scraper (7) being provided for removing the skin from the tool (2), characterized in that the peeling tool (2) is constructed in the form of a driven supercooled hollow shaft mounted to rotate preferably in the horizontal plane; the external diameter of the peeling tool (2) increases in the axial direction towards its ends; one or more said peeling tools (2) are provided in a peeling machine, and at least one processing shaft (5) formed by walls (17, 18) converging towards the contour of the peeling tool (2) is provided above each peeling tool (2), and a scraper (7) whose shape is adapted to the contour of the peeling tool (2) is associated with each peeling tool (2).

2. A peeling machine according to claim 1, characterized in that at least one wall (17, 18) of the processing shaft (5) takes the form of a pivotably mounted flap.

3. A peeling machine according to claims 1 or 2, characterized in that the scraper (7) is disposed beneath the peeling tool (2).

4. A peeling machine according to one of claims 1 to 3, characterized in that the external contour of the peeling tool (2) is formed by two preferably identically constructed frustrums (14, 15) interconnected at the minor diameter; a larger radius is provided between the frustrums (14, 15); and the conical angle of the frustrums (14, 15) has a value between 20° and 45°, preferably 35°, referred to their centre line.

5. A peeling machine according to one of claims 1 to 4, characterized in that the walls (17, 18) forming the processing shaft (5) of a peeling tool (2) are constructed in the form of interconnected, pivotably mounted flaps whose shape is substantially adapted in the axial direction to the external contour of the peeling tool (2).

6. A peeling machine according to claim 4, characterized in that a number of peeling tools (2) are interconnected at the major diameter of the frustrums (14, 15) to form a peeling drum (3); a peeling machine has one or more peeling drums (3) constructed in the form of hollow shafts and disposed parallel with one another, preferably in pairs; and the peeling drums (3) are preferably constructed to be driven to opposite hands.

7. A peeling machine according to claim 6, characterized in that a conveyor belt (39) which removes the peeled potatoes (44) in the axial direction of the peeling drums (3) is disposed beneath each of the processing shafts (5) of the peeling tools (2) and between each pair of adjacent peeling drums (3).

8. A peeling machine according to claim 6, characterized in that all the walls (17, 18) forming the processing shafts (5) of the peeling tools (2) of a peeling drum (3) are constructed coupled to one another and, independent on the peeling drum speed and the selected peeling drum diameter, the pivoting drive (26) for the walls (17, 18) is constructed to pivot the walls (17, 18) outwards once or several times per peeling drum rotation and to pivot the walls of adjacent peeling drums (3) outwards offset in time in relation to one another.

9. A peeling machine according to claim 6, characterized in that the scrapers (7) associated with the individual peeling tools (2) of a peeling drum (3) are disposed on a common shaft (35), the shaft (35) having rubber elements (36) which press the scrapers (7) against the peeling drum (3).

10. A peeling machine according to one of claims 1 to 9, characterized in that a supply chute (37) conveying the potatoes (43) to the processing shafts (5) is provided above the processing shafts (5), and the walls (17) of the processing shafts (5) disposed closer to and below the supply chute (37) have webs (38) which close over the supply chute (37) in the operational position of the walls (17, 18).

11. A peeling machine according to claim 10, characterized in that the walls (18) of the processing shaft (5) disposed at a greater distance from the supply chute (37), the supply chute (37) and/or the webs (38) are constructed and arranged to close the supply openings of the processing shafts (5) during the discharge of the peeled potatoes (44) from the processing shafts (5).

12. A peeling machine according to claim 10, characterized in that a feeding container (4) is disposed in the zone of the supply chute (37).

## Revendications

1. Machine à peler destinée à enlever la pelure de fruits et de divers types de légumes, de préférence de pommes de terre cuites, comprenant un outil (2) sous-refroidi et dans laquelle les pommes de terre sont roulées sur l'outil (2), et, ainsi leur pelure est congelée et éliminée des pommes de terre, et dans laquelle un racloir (7) est prévu pour éliminer les pelures de l'outil (2), caractérisée en ce que l'outil de pelage (2) est constitué par un arbre creux monté rotatif de préférence dans un plan horizontal, entraîné et sous-refroidi, l'outil de pelage (2) comporte, dans le sens axial, un diamètre extérieur croissant vers ses extrémités, un ou plusieurs de ces outils de pelage (2) sont prévus dans une machine de pelage et, au-dessus de chaque outil de pelage (2), il est prévu au moins une cage de traitement (5) constituée par des parois (17, 18) qui s'étendent jusqu'au contour de l'outil de pelage, et en ce qu'un racloir (7) dont la forme est adaptée au contour de l'outil de pelage (2) est associé à chaque outil de pelage (2).

2. Machine à peler suivant la revendication 1, caractérisée en ce qu'au moins une paroi (17, 18) de la cage de traitement (5) est constituée par un volet monté basculant.

3. Machine à peler suivant la revendication 1 ou 2, caractérisée en ce que le racloir (7) est disposé au-dessous de l'outil de pelage (2).

4. Machine à peler suivant l'une des revendications 1 à 3, caractérisée en ce que le contour extérieur de l'outil de pelage (2) est réalisé à partir de deux troncs de cône (14, 15) reliés l'un à l'autre par leur petit diamètre et de préférence similaires, un plus grand rayon est prévu entre les troncs de cône (14, 15) et l'angle de cône des troncs de cône (14, 15) a une valeur comprise entre 20 et 45°, de préférence de 35°, par rapport à leur axe central.

5. Machine à peler suivant l'une des revendications 1 à 4, caractérisée en ce que les parois (17, 18) qui forment la cage de traitement (5) d'un outil de pelage (2) sont constituées par des volets couplés montés basculants et dont la forme est adaptée dans une large mesure au contour extérieur de l'outil de pelage (2) dans le sens axial.

6. Machine à peler suivant la revendication 4, caractérisée en ce que plusieurs outils de pelage (2) sont reliés les uns aux autres par le plus grand diamètre des troncs de cône (14, 15), en formant un tambour de pelage (3), et en ce qu'une machine à peler est équipée d'un ou plusieurs tambours de pelage (3) réalisés sous forme d'arbres creux disposés parallèlement les uns aux autres, de préférence par paires, les tambours de pelage (3) étant de préférence entraînés en sens inverses.

7. Machine à peler suivant la revendication 6, caractérisée en ce qu'une bande transporteuse (29) évacuant les pommes de terre pelées (44) dans le sens axial des tambours de pelage (3) est disposée sous la cage de traitement (5) des outils de pelage (2) et entre chaque paire de tambours de pelage (3) voisins.

8. Machine à peler suivant la revendication 6, caractérisée en ce que toutes les parois (17, 18) formant la cage de traitement (5) des outils de pelage (2) d'un tambour de pelage (3) sont couplées, et en ce que l'entraînement en basculement (26) des parois (17, 18) fait basculer les parois (17, 18), en fonction de la vitesse de rotation du tambour de pelage et du diamètre choisi du tambour de pelage, une ou plusieurs fois par révolution du tambour de pelage, et fait basculer les parois (17, 18) de tambours de pelage (3) voisins de manière décalée dans le temps.

9. Machine à peler suivant la revendication 6, caractérisée en ce que les racloirs (7) associés aux outils de pelage (2) individuels d'un tambour de pelage (3) sont disposés sur un arbre commun (35), cet arbre comportant des éléments en caoutchouc (36) qui pressent les racloirs (7) contre le tambour de pelage (3).

10. Machine à peler suivant l'une des revendications 1 à 9, caractérisée en ce qu'un toboggan d'alimentation (37) amenant les pommes de terre (43) dans les cages de traitement (5) est prévu au-dessus des cages de traitement (5), et en ce que les parois (17) des cages de traitement (5) plus proches du toboggan (37) et disposées au-dessous de celui-ci présentent, en position de travail des parois (17, 18), des barrettes (38) d'obturation situées au-dessus du toboggan (37).

11. Machine à peler suivant la revendication 10, caractérisée en ce que les parois (18) des cages de traitement (5) plus éloignées du toboggan d'alimentation (37), le toboggan d'alimentation (37) et/ou les barrettes (38) sont réalisées et agencées de façon à obturer les ouvertures d'alimentation des cages de traitement (5) pendant l'évacuation des pommes de terre pelées (44) hors des cages de traitement (5).

12. Machine à peler suivant la revendication 10, caractérisée en ce qu'une cuve de réserve (4) est disposée dans la région du toboggan d'alimentation (37).
